# NOUVEAU FASCICULE DE BREVET EUROPEEN

(11) **EP 0 544 961 B2**
(45) Date de publication et mention de la décision concernant l'opposition: **21.01.1998**
(45) Mention de la délivrance du brevet: 12.04.1995
(21) Numéro de dépôt: 91403244.6
(22) Date de dépôt: 29.11.1991
(51) Int. Cl.: B60J 10/08, E06B 7/23

(54) **Joint d'étanchéité pour encadrement d'une carrosserie d'automobile et procédé de fabrication de ce joint**
Dichtungsprofilleiste für Öffnungen von Kraftfahrzeug-Karosserien und ihre Herstellungsweise
Weatherstrip for vehicle closures and method for its manufacture

(43) Date de publication de la demande: 09.06.1993
(73) Titulaire: BTR SEALING SYSTEMS FRANCE, 92000 Nanterre (FR)
(72) Inventeur: Mesnel, François, F-92200 Neuilly-Sur-Seine (FR); Mesnel, Gérard, F-78420 Carrières-sur-Seine (FR)
(74) Mandataire: Jolly, Jean-Pierre

(56) Documents cités:
- CH-A- 472 567
- FR-A- 2 332 409
- FR-A- 2 659 411
- FR-A- 2 669 279
- JP-A- 1 264 827
- US-A- 4 531 326
- US-A- 5 099 612

## Description

La présente invention concerne un joint d'étanchéite, pour encadrement d'une ouverture d'une carrosserie d'automobile ou similaire. L'invention a également pour objet un procédé de fabrication de ce joint d'étanchéité.

On sait que de tels joints pour encadrements de porte ou de coffre d'automobile comprennent habituellement un profilé à section en U formant pince, en une matière thermoplastique munie d'une armature métallique, ce profilé étant destiné à coiffer une partie saillante de l'encadrement pour en rendre solidaire le joint d'étanchéité, et un élément tubulaire déformable élastiquement, généralement en un matériau cellulaire, qui est attenant au profilé formant pince et qui est destiné à être comprimé entre l'encadrement et l'élément mobile correspondant de l'automobile pour assurer l'étanchéité.

Le profilé formant pince et l'élément tubulaire peuvent être coextrudés à partir d'une même tête d'extrusion. Ils peuvent aussi être fabriqués séparément et être ensuite rendus solidaires l'un de l'autre par collage.

C'est à ce dernier processus de fabrication que s'intéresse la présente invention et elle vise à remédier aux inconvénients rencontrés lors de la mise en place de ces joints d'étanchéité sur des encadrements d'ouverture de carrosserie présentant dans certains angles des courbures très accentuées.

En effet, en de tels emplacements, l'élément tubulaire, qui est d'un volume relativement important et dont la section transversale a généralement un profil complexe, a tendance, d'une part, à former des plis d'autant plus accusés que la courbure de l'encadrement est plus importante, d'autre part, à se décaler par rapport au profilé en forme de pince et à se déformer.

Cet inconvénient est bien connu dans la technique (voir les brevets et demandes de brevet français n° FR-A-2 247 341, FR-A-2 133 107, FR-A-2 469 321 et FR-A-2 624 191 de la Demanderesse) et l'on a proposé diverses solutions à ce problème, mais elles sont toutes relativement compliquées et coûteuses, car elles impliquent la plupart du temps que l'on rapporte un excès local de matière sur la partie du joint située dans l'angle de l'encadrement.

La présente invention vise à remédier d'une manière différente à cet inconvénient en ne solidarisant pas localement le profilé formant pince et l'élément tubulaire d'étanchéité, au moment de l'assemblage des éléments du joint d'étanchéité, et en donnant à la portion de cet élément tubulaire non solidaire du profilé une longueur légèrement supérieure à celle de la portion correspondante du profilé, cette portion étant ensuite assemblée par collage. De cette manière, en disposant cette partie du joint d'étanchéité dans l'angle de l'encadrement de porte qui a un rayon de courbure fortement marqué, l'élément tubulaire d'étanchéité disposera d'un degré de liberté par rapport au profilé formant pince et il pourra ainsi occuper de lui-même la position la plus favorable, sans plis, affaissements ou autres déformations, lors de sa mise en place sur l'encadrement, par son décalage local dans l'angle par rapport à l'élément formant pince.

L'invention a par conséquent pour objet un joint d'étanchéité pour encadrement d'une ouverture d'une carrosserie d'automobile, ce joint comprenant un profilé armé formant pince à section en U, en un matériau thermoplastique, et un élément tubulaire d'étanchéité en un matériau déformable élastiquement, qui adhère latéralement à la surface externe du profilé à section en U, (Joint du type divulgué, par exemple, dans l'un quelconque des documents précités, caractérisé en ce que, suivant une partie au moins de sa longueur, correspondant à l'emplacement d'un angle de l'encadrement d'ouverture à équiper, l'élément tubulaire d'étanchéité présente une longueur supérieure à celle de la partie du profilé, auquel il adhère, la portion de l'élément tubulaire de longeur supérieure à celle de la partie correspondante du profilé ayant été rendue non adhérente à ladite partie correspondante du profilé par surélévation, en étant décalée latéralement par rapport à celui-ci, puis ayant été collée sur ce profilé.

Le profilé tubulaire épousera ainsi au mieux la forme correspondante de l'angle de l'encadrement de porte que le joint est destiné à équiper.

L'invention a également pour objet un procédé de fabrication d'un tel joint d'étanchéité pour encadrement d'une ouverture d'une carrosserie d'automobile, ce joint comprenant un profilé armé formant pince à section en U, en un matériau thermoplastique, et un élément tubulaire d'étanchéité, en un matériau déformable élastiquement, qui adhère latéralement à la surface externe du profilé à section en U, ce procédé étant du type dans lequel le profilé à section en U et l'élément tubulaire d'étanchéité sont réalisés séparément et sont assemblés par collage, ce procédé étant caractérisé en ce que, pendant la phase de collage, le profilé à section en U et l'élément tubulaire d'étanchéité sont séparés suivant une partie au moins de leur longueur par une cale d'épaisseur s'opposant à leur solidarisation en cet emplacement, cette cale étant disposée de façon telle que l'élément tubulaire forme au-dessus du profilé un pont d'une longueur supérieure à celle de la partie correspondante du profilé, cette cale étant ensuite dégagée du joint, et les parties précédemment séparées étant alors assemblées par collage.

La cale d'épaisseur utilisée pourra également servir à décaler latéralement par rapport au profilé la portion de l'élément tubulaire qui n'adhère pas à celui-ci.

Ce procédé est donc très facile à mettre en oeuvre et l'invention permet ainsi de remédier de façon simple et très peu coûteuse aux inconvénients de la technique antérieure rappelés ci-dessus.

De façon connue en soi, la partie de l'élément tubulaire de longueur supérieure à celle du profilé pourra être renforcée intérieurement, soit par un insert tubulaire, par exemple en un matériau cellulaire, soit par une mousse de matière plastique polymérisée in situ. Cette partie pourra aussi subir une déformation permanente à chaud de manière à accroître localement sa section transversale.

Les dessins annexés, qui n'ont pas de caractère limitatif, illustrent diverses formes de mise en oeuvre de l'invention. Sur ces dessins :
La figure 1 est une vue en perspective d'un joint de la technique antérieure recourbé fortement et présentant des plis et un affaissement dans la partie recourbée ;
La figure 2 est une coupe suivant la ligne II-II de la figure 1 ;
La figure 3 est une vue en perspective illustrant la mise en oeuvre du procédé de fabrication conforme à l'invention ;
La figure 4 est une coupe suivant la ligne IV-IV de la figure 3;
La figure 5 est une vue en perspective montrant la partie de l'élément tubulaire non solidaire du profilé à section en U;
La figure 6 est une vue de côté de ce même joint, montrant la surélévation de l'élément tubulaire par rapport au profilé à section en U ;
La figure 7 est une coupe suivant la ligne VII-VII de la figure 6 ;
La figure 8 montre un joint conforme à l'invention avec un renfort dans une partie recourbée ;
Les figures 9 et 10 sont deux coupes suivant la ligne IX-IX, illustrant deux types de renfort ;
La figure 11 illustre une autre forme de réalisation d'un joint conforme à l'invention, dans lequel la partie de l'élément tubulaire initialement non solidaire du profilé à section en U a été déformée à chaud avant d'être rendue solidaire de celui-ci, pour occuper un volume plus important sans former des plis dans l'angle d'un encadrement de porte ;
La figure 12 est une vue de dessus du joint de la figure 11 équipé d'un renfort interne dans la partie d'angle de l'encadrement de porte ;
Les figures 13 et 14 sont des coupes suivant les lignes XIII-XIII et XIV-XIV de la figure 12.

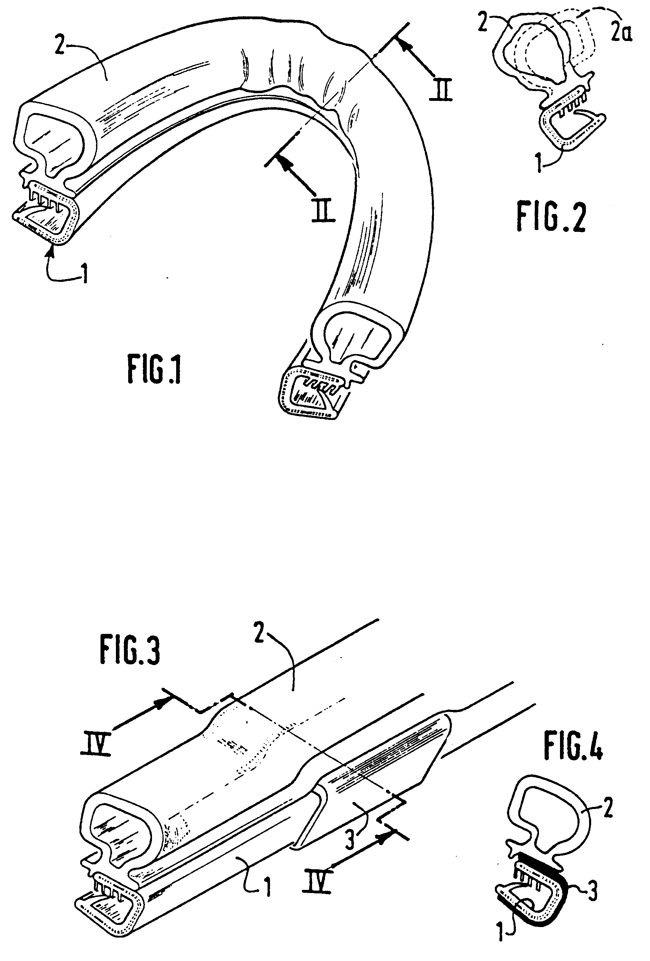

Le joint d'étanchéité pour encadrement d'ouverture d'une carrosserie d'automobile qui est représenté sur les figures 1 et 2 comprend, de façon connue, un profilé 1 formant pince, à section transversale en U, qui comporte une armature métallique, également à section en U, noyée dans la masse du polymère constituant le profilé, du polychlorure de vinyle par exemple. Ce profilé 1 est destiné à coiffer et pincer un bord saillant de l'ouverture de carrosserie à équiper et, sur la face externe de la branche du U destinée à être tournée vers l'extérieur de la carrosserie est collé un élément tubulaire d'étanchéité 2, destiné à être comprimé entre l'encadrement de l'ouverture et l'organe mobile obturant cette ouverture, une porte par exemple. L'élément tubulaire 2 est en un matériau élastiquement déformable et, de préférence, en caoutchouc cellulaire.

Comme on le voit sur les figures 1 et 2, lorsqu'un tel joint est replié fortement, par exemple pour épouser la forme d'un encadrement de porte dont un angle a une courbure accusée, l'élément tubulaire 2 se plisse dans l'angle et a tendance à s'affaisser par rapport à la position 2a qui devrait être la sienne (position représentée en traits interrompus sur la figure 2).

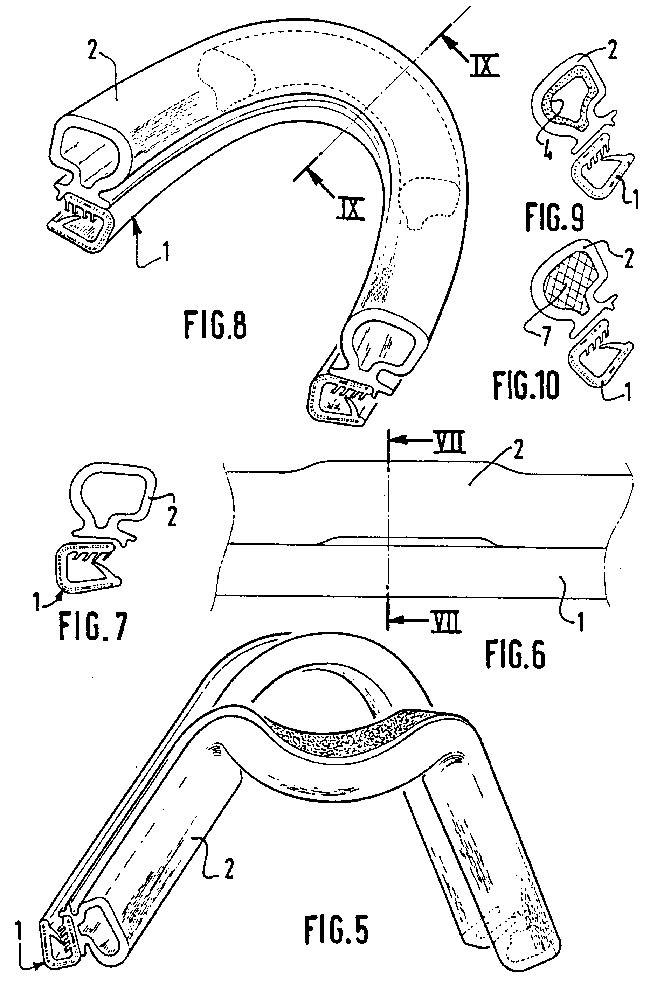

C'est à cet inconvénient que vise à remédier la présente invention et, dans ce but, elle propose, pendant la phase de collage de l'élément tubulaire 2 sur le profilé 1, d'interposer entre eux, à l'emplacement correspondant à l'angle de l'encadrement de porte à équiper, une cale d'épaisseur 3, formée par exemple, comme représenté sur les figures 3 et 4, par une pince ou un clip apte à coiffer transversalement le profilé sur une certaine longueur (voir figures 3 et 4). Du fait de la présence de la cale 3, le profilé 1 et l'élément tubulaire 2 n'adhéreront pas l'un à l'autre à cet emplacement et la partie non collée de l'élément 2 sera surélevée par rapport à la partie correspondante du profilé 1, en ayant ainsi une longueur supérieure à celle de cette partie. Ces deux parties seront ensuite assemblées entre elles par collage.

Comme on Te voit sur les figures 5 à 14, le joint d'étanchéité ainsi réalisé peut être replié avec une forte courbure, sans pour autant que l'élément tubulaire 2 se plisse, s'affaisse ou se déforme d'une quelconque façon, dans la portion d'angle soumise à la courbure (voir figures 5 à 7), du fait de l'excès de longueur de l'élément 2 par rapport au profilé 1. L'élément 2 peut ainsi conserver une forme tubulaire non affectée par la courbure et occuper dans l'angle la position la plus appropriée. Ainsi qu'il a été indiqué ci-dessus, la cale 3 utilisée pendant la phase de collage peut d'ailleurs avoir une forme telle qu'elle déporte latéralement l'élément 2 par rapport au profilé 1, pour favoriser la mise en place de cet élément 2 dans l'angle de l'encadrement de porte.

Après retrait de la cale 3, les parties non solidaires du profilé 1 et de l'élément 2 seront assemblées par collage de leurs portions d'angle.

Pour accroître la résistance de l'élément tubulaire 2 à la déformation dans la portion d'angle de l'encadrement de porte, avant de le rendre solidaire du profilé 1, différents moyens pourront être utilisés.

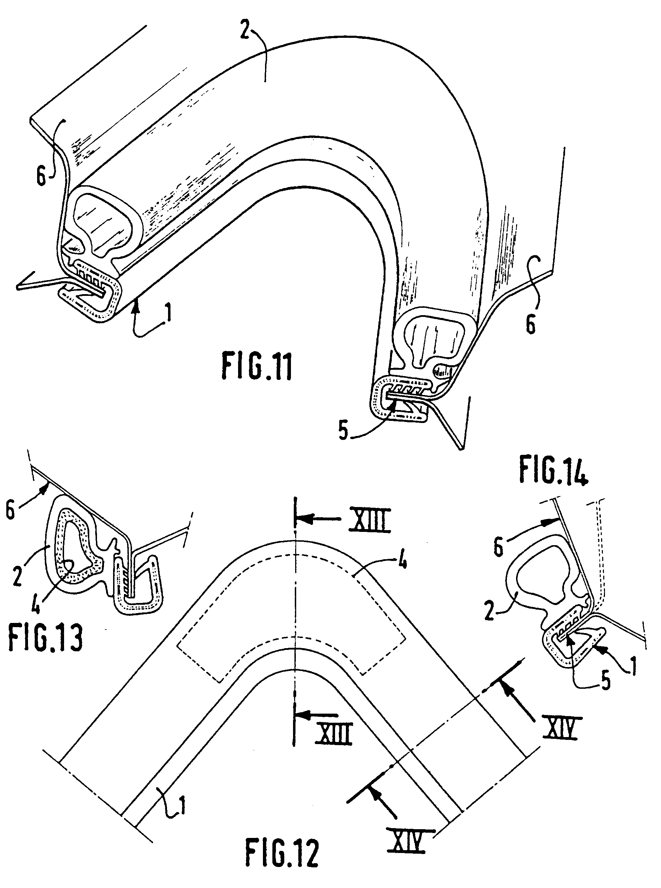

On peut simplement, comme représenté sur les figures 8 et 9, loger de façon connue dans le tube 2, en cet emplacement, un insert tubulaire 4, par exemple en un matériau cellulaire.

On peut aussi introduire une résine de matière plastique 7 dans la partie de l'élément tubulaire 2 destinée à être coudée (figure 10) et provoquer ensuite la polymérisation et éventuellement l'expansion in situ de cette résine.

Enfin, comme illustré par les figures 11 à 14, où le profilé 1 est représenté en position d'utilisation, c'est-à-dire chevauchant et pinçant une partie saillante 5 d'un encadrement de porte 6, on peut déformer à chaud de façon permanente la portion d'angle de l'élément tubulaire 2 avant de la rendre solidaire du profilé, afin de l'épanouir en cet emplacement, pour qu'elle présente une section transversale supérieure et occupe un volume plus important, en l'empêchant ainsi de se plisser ou de se déformer.

Dans ce cas, également, comme représenté sur les figures 12 à 14, on peut loger un insert tubulaire 4 dans la portion épanouie de l'élément tubulaire 2, afin d'accroître sa résistance dans la partie incurvée. On pourrait également y injecter et y faire polymériser et expanser in situ une résine.

Toutes ces formes de mise en oeuvre de l'invention seront donc faciles à mettre en oeuvre et d'une manière peu coûteuse. L'invention apporte donc un moyen simple et efficace pour conserver aux éléments tubulaires d'étanchéité la forme qui est la leur même dans des parties à courbure très marquée des encadrements d'ouvertures de carrosserie d'automobiles.

## Revendications

1. Joint d'étanchéité pour encadrement d'une ouverture d'une carrosserie d'automobile, ce joint comprenant un profité armé (1) formant pince à section en U, en un matériau thermoplastique, et un élément tubulaire d'étanchéité (2) en un matériau déformable élastiquement, qui adhère latéralement à la surface externe du profité à section en U (1), caractérisé en ce que, suivant une partie au moins de sa longueur, correspondant à l'emplacement d'un angle de l'encadrement d'ouverture à équiper, l'élément tubulaire (2) présente une longueur supérieure à celle de la partie correspondante du profilé (1), auquel il adhère, la portion de l'élément tubulaire (2) de longueur supérieure à celle de la partie correspondante du profilé (1) ayant été rendue non adhérente à ladite partie correspondante du profilé (1) par surélévation, en étant décalée latéralement par rapport à celui-ci, puis ayant été collée sur ce profilé.

2. Joint selon la revendication 1, caractérisé en ce que la portion de l'élément tubulaire (2) de longueur supérieure à celle de la partie correspondante du profilé (1) comporte un épanouissement de plus grande section transversale résultant d'une déformation permanente à chaud de cette partie de l'élément tubulaire.

3. Joint selon l'une des revendications 1 et 2, caractérisé en ce que la partie de l'élément tubulaire (2) de longueur supérieure à celle de la partie correspondante du profilé (1) est renforcée intérieurement par un insert tubulaire (4), notamment en un matériau cellulaire.

4. Joint selon l'une des revendications 1 et 2, caractérisé en ce que la partie de l'élément tubulaire (2) de longueur supérieure à celle de la partie correspondante du profilé (1) est renforcée intérieurement par une mousse de matière plastique polymérisée in situ.

5. Procédé de fabrication d'un joint d'étanchéité selon l'une des revendications précédentes, ce procédé étant du type dans lequel le profilé à section en U et l'élément tubulaire d'étanchéité sont réalisés séparément et sont assemblés par collage, ce procédé étant caractérisé en ce que, pendant la phase de collage, le profilé à section en U (1) et l'élément tubulaire d'étanchéité (2) sont séparés suivant une partie au moins de leur longueur par une cale d'épaisseur (3) s'opposant à leur solidarisation en cet emplacement, cette cale (3) étant disposée de façon telle que l'élément tubulaire (2) forme au-dessus du profilé (1) un pont d'une longueur supérieure à celle de la partie correspondante du profilé, cette cale (3) étant ensuite dégagée du joint et les parties précédemment séparées étant alors assemblées par collage.

6. Procédé selon la revendication 5, caractérisé en ce que la cale d'épaisseur est constituée par une pince ou un clip (3) qui coiffe le profité (1) sur une partie de sa longueur.

7. Procédé selon l'une des revendications 5 et 6, caractérisé en ce que la cale d'épaisseur (3) a une forme telle qu'elle décale latéralement, pendant la phase de collage, la portion de l'élément tubulaire (2) séparée par cette cale du profilé (1).

8. Procédé selon l'une des revendications 5 à 7, caractérisé en ce que la portion de l'élément tubulaire (2) de longueur supérieure à cette de la partie correspondante du profilé (1) est déformée à chaud de manière à accroître localement sa section transversale, avant d'être rendue solidaire du profilé (1).

9. Procédé selon l'une des revendications 5 à 8, caractérisé en ce que, dans la partie de l'élément tubulaire (2) de longueur supérieure à celle du profilé (1), on introduit un élément de renfort constitué par un insert tubulaire (4), de préférence en un matériau cellulaire, avant de rendre cette portion solidaire du profité (1).

10. Procédé selon l'une des revendications 5 à 8, caractérisé en ce que, dans ta portion de l'élément tubulaire (2) de longueur supérieure à celle de la partie correspondante du profilé (1), on introduit une résine dont on provoque la polymérisation et éventuellement l'expansion in situ.

## Claims

1. A seal for a frame structure surrounding an opening of a motor vehicle body, said seal comprising a reinforced shaped portion (1) forming a gripping portion of U-shaped section, of a thermoplastic material, and a tubular sealing element (2) of an elastically deformable material, which adheres laterally to the outside surface of the portion of U-shaped section (1), characterised in that, along a part at least of its length, corresponding to the location of a corner of the frame structure surrounding the opening to be equipped, the tubular element (2) is of a length which is greater than that of the corresponding part of the shaped portion (1) to which it adheres, the portion of the tubular element (2) of a length greater than that of the corresponding part of the shaped portion (1) having been caused not to adhere to the corresponding part of the shaped portion (1) by being raised, while being laterally displaced with respect thereto, and then having been glued to said shaped portion.

2. A seal according to claim 1 characterised in that the portion of the tubular element (2) of a length which is greater than that of the corresponding part of the shaped portion (1) comprises an enlargement of larger cross-section resulting from permanent deformation in the hot condition of that part of the tubular element.

3. A seal according to one of claims 1 and 2 characterised in that the part of the tubular element (2) of a length greater than that of the corresponding part of the shaped portion (1) is reinforced internally by a tubular insert (4), in particular of a cellular material.

4. A seal according to one of claims 1 and 2 characterised in that the part of the tubular element (2) of a length greater than that of the corresponding part of the shaped portion (1) is reinforced internally by a foam of plastics material which is polymerised in situ.

5. A process for the production of a seal according to one of the preceding claims, said process being of the type in which the shaped portion of U-shaped section and the tubular sealing element are produced separately and are assembled by glueing, said process being characterised in that, during the glueing phase, the portion of U-shaped section (1) and the tubular sealing element (2) are separated along a part at least of their length by a packing piece (3) which prevents them from being secured together at said location, said packing piece (3) being disposed in such a way that one tubular element (2) forms above the shaped portion (1) a bridge of a length which is greater than that of the corresponding part of the shaped portion, said packing piece (3) than being removed from the seal and the parts which were previously separated then being assembled by glueing.

6. A process according to claim 5 characterised in that the packing piece is formed by a gripping member or clip (3) which fits over the shaped portion (1) over a part of its length.

7. A process according to one of claims 5 and 6 characterised in that the packing piece (3) is of a shape such that during the glueing phase it laterally displaces the portion of the tubular element (2), which is separated from the shaped portion (1) by said packing piece.

8. A process according to one of claims 5 to 7 characterised in that the portion of the tubular element (2) of a length which is greater than that of the corresponding part of the shaped portion (1) is deformed in the hot condition in such a way as locally to increase its cross-section before being feed with respect to the shaped portion (1).

9. A process according to one of claims 5 to 8 characterised in that, in the part of the tubular element (2) of a length which is greater than that of the shaped portion (1), a reinforcing element formed by a tubular insert (4), preferably of a cellular material, is introduced before said portion is fixed with respect to the shaped portion (1).

10. A process according to one of claims 5 to 8 characterised in that, in the portion of the tubular element (2) of a length which is greater than that of the corresponding part of the shaped portion (1), there is introduced a resin of which polymerisation and possibly expansion in situ is caused.

## Patentansprüche

1. Abdichtung für die Einfassung einer Karosserieöffnung eines Kraftfahrzeugs, die ein bewehrtes Profilelement (1), das ein U-förmiges Klemmteil aus thermoplastischem Material bildet, und ein rohrförmiges Dichtungselement (2) aus elastisch verformbarem Material aufweist, welches seitlich an der äußeren Oberfläche des U-förmigen Profilelements (1) anhaftet, dadurch gekennzeichnet, daß nachfolgend auf einen Abschnitt mindestens seiner Länge entsprechend der Stelle eines Winkels der Einfassung der auszurüstenden Öffnung das rohrförmige Element (2) eine Länge aufweist, die größer ist als diejenige des entsprechenden Abschnitts des Profilelements (1), an welchem das rohrförmige Element anhaftet, wobei der Abschnitt des rohrförmigen Elements (2) mit gegenüber dem entsprechendem Abschnitt des Profilelements (1) größerer Länge, der durch Erhöhung nicht an den entsprechenden Abschnitt des Profilelements (1) anhaftet, indem er seitlich gegenüber diesem verschoben ist, dann auf dieses Profilelement geklebt wird.

2. Abdichtung nach Anspruch 1, dadurch gekennzeichnet, daß der Abschnitt des rohrförmigen Elements (2) von gegenüber derjenigen des entsprechenden Abschnitts des Profilelements (1) überlegener Länge eine Erweiterung von größerem Querschnitt aufweist, die sich aus einer dauerhaften Deformation unter Wärmeeinwirkung dieses Abschnitts des rohrförmigen Elements ergibt.

3. Abdichtungen nach einem der Abschnitte 1 und 2, dadurch gekennzeichnet, daß der Abschnitt des rohrförmigen Elements (2) von gegenüber dem entsprechendem Abschnitt des Profilelementes (1) überlegener Länge innen durch einen rohrförmigen Einsatz (4), insbesondere aus Zellmaterial, verstärkt ist.

4. Abdichtungen nach einem der Abschnitte 1 und 2, dadurch gekennzeichnet, daß der Abschnitt des rohrförmigen Elements (2) von gegenüber dem entsprechenden Abschnitt des Profilelementes (1) überlegener Länge innen durch einen Schaum aus vor Ort polymerisiertem Kunststoffmaterial verstärkt ist.

5. Verfahren zur Herstellung einer Abdichtung nach einem der vorhergehenden Ansprüche, wobei das verfahren der Art ist, bei welcher das U-förmige Profilelement und das rohrförmige Dichtelement getrennt hergestellt und durch Kleben verbunden werden, dadurch gekennzeichnet, daß gemäß dem Verfahren während der Klebephase das U-förmige Profilelement (1) und das rohrförmige Dichtelement (2) über einen Abschnitt ihrer Länge durch ein Dickenfüllstück (3) von einander getrennt sind, über welche Länge sie sich zu ihrer Befestigung aneinander an dieser Stelle gegenüberliegen, wobei das Füllstück (3) derart ausgelegt ist, daß das rohrförmige Element (2) über dem Profilelement (1) eine Brücke von einer Länge bildet, die derjenigen des entsprechenden Abschnitts des Profilelements überlegen ist, und wobei dieses Füllstück (3) in der Folge von der Abdichtung entfernt wird und die zuvor getrennten Bereiche nun durch Kleben verbunden werden.

6. Verfahren nach Anspruch 5, dadurch gekennzeichnet, daß das Dickenfüllstück durch ein Klemmteil oder einen Klips (3) gebildet wird, die das Profilelement (1) über einen Bereich ihrer Länge abdecken.

7. Verfahren nach einem der Ansprüche 5 und 6, dadurch gekennzeichnet, daß das Dickenfüllstück (3) eine Form aufweist, die so beschaffen ist, daß sie während der Phase des Klebens den Abschnitt des rohrförmigen Elements seitlich verschiebt, der durch dieses Füllstück von dem Profilelement (1) getrennt ist.

8. Verfahren nach einem der Ansprüche 5 bis 7, dadurch gekennzeichnet, daß der Abschnitt des rohrförmigen Elements (2) von der gegenüber derjenigen des entsprechenden Bereichs des Profilelements (1) überlegenen Länge unter Wärmeeinwirkung in einer Weise verformt wird, daß es seinen Querschnitt an dieser Stelle erweitert, bevor es an dem Profilelement (1) befestigt wird.

9. Verfahren nach einem der Ansprüche 5 bis 8, dadurch gekennzeichnet, daß ein Verstärkungselement, das durch einen rohrförmigen Einsatz (4) bevorzugt aus einem Zellmaterial, gebildet wird, in den Abschnitt des rohrförmigen Elements (2) von der gegenüber derjenigen des Profilements (1) überlegenen Länge eingeführt wird, bevor dieser Abschnitt an dem Profilelement (1) befestigt wird.

10. Verfahren nach einem der Ansprüche 5 bis 8, dadurch gekennzeichnet, daß ein Harz, dessen Polymerisation und ggf. Ausdehnung an Ort und Stelle herbeigeführt wird, in den Abschnitt des rohrförmigen Elements (2) von der gegenüber derjenigen des entsprechenden Abschnitts des Profilelements (1) überlegenen Länge eingeführt wird.
